# NEUE EUROPÄISCHE PATENTSCHRIFT

(11) **EP 0 447 537 B2**
(45) Veröffentlichungstag und Bekanntmachung des Hinweises auf die Entscheidung über den Einspruch: **09.08.2000**
(45) Hinweis auf die Patenterteilung: 28.06.1995
(21) Anmeldenummer: 90915776.0
(22) Anmeldetag: 08.10.1990
(51) Int. Cl.: B01D 53/70, B01D 53/86

(54) **VERFAHREN ZUR VERRINGERUNG DER EMISSION VON ORGANISCHEN PRODUKTEN UNVOLLSTÄNDIGER VERBRENNUNG**
PROCESS FOR REDUCING THE EMISSION OF ORGANIC COMPOUNDS PRODUCED BY INCOMPLETE COMBUSTION
PROCEDE DE REDUCTION DES EMISSIONS DE PRODUITS ORGANIQUES D'UNE COMBUSTION INCOMPLETE

(30) Priorität: 06.10.1989 DE 3933480; 03.07.1990 DE 4021135
(43) Veröffentlichungstag der Anmeldung: 25.09.1991
(73) Patentinhaber: BASF AKTIENGESELLSCHAFT, 67056 Ludwigshafen (DE)
(72) Erfinder: HAGENMAIER, Hanspaul, Prof.Dr., D-7400 Tübingen (DE); MITTELBACH, Günther, D-5810 Witten (DE)
(74) Vertreter: Kinzebach, Werner, Dr.
(86) Internationale Anmeldenummer: EP9001685
(87) Internationale Veröffentlichungsnummer: WO9104780

(56) Entgegenhaltungen:
- EP-A- 387 417
- EP-A- 0 402 122
- WO-A-88/00483
- WO-A-90/13352
- DE-A- 3 431 961
- DE-A- 3 601 917
- DE-A- 3 619 337
- DE-A- 3 636 250
- DE-A- 3 804 722
- US-A- 4 085 193
- H. Hagenmaier et.al.,"Versuche zum katalytischen NOx- und Dioxinabbau im Abgas einer Hausmüllverbrennungsanlage", VGB Kraftwerkstechnik 70(1990), Heft 6, S 49-493 (seit 09.07.90 der Öffentlichkeit zugänglich)
- K. Hagenmaier et. al, "Catalytic oxidation - a technology for reduction of PCDD/PCDF emission from waste incineration facilities to below 0.1ng TEQ/m3", Organohalogen Compounds 3 (1990), s. 65-68 (seit 14.09.90 der Öffentlichkeit zugänglich)
- H. Hagenmaier, "Katalytische Oxidation halogenierter Kohlenwasserstoffe unter besonderer Berücksichtigung des Dioxinproblems", VDI Berichte Nr. 730, 1989, S. 239-254

## Beschreibung

Die Erfindung betrifft ein Verfahren zur Verringerung der Emission von organischen Halogenverbindungen.

Verbrennungsanlagen, insbesondere Müll- und Abfallverbrennungsanlagen, emittieren auch nach einer weitgehenden Rauchgasreinigung noch organische Verbindungen als Produkte unvollständiger Verbrennung (PIC = Products of Incomplete Combustion). Ein Teil dieser PIC's sind Organohalogenverbindungen (Chlorbenzole, Chlorphenole, polychlorierte Biphenyle, polyhalogenierte (Chlor, Brom) Dibenzodioxine und Dibenzofurane etc.). Diese Verbindungen sind toxisch, lassen sich außerordentlich schwer abbauen und belasten daher die Umwelt, wobei insbesondere Spätschäden zu befürchten sind. Dabei kommt den polyhalogenierten Dibenzodioxinen und Dibenzofuranen (im folgenden zusammenfassend und kurz als "Dioxine" bezeichnet) hinsichtlich des potentiellen Gesundheitsrisikos der Emissionen aus Verbrennungsanlagen eine besondere Bedeutung zu.

Zur Verringerung der Emission von Dioxinen in Abgasen werden gegenwärtig im Rahmen von Labor- und Pilotuntersuchungen die beiden folgenden Ansätze verfolgt:
a) Verhinderung der de novo Synthese der Dioxine
   Es konnte gezeigt werden (EP-A-252 521), daß Dioxine durch eine katalytische de novo Synthese an Filterstäuben von Müll- und Abfallverbrennungsanlagen im Temperaturbereich von 250 bis 400 °C entstehen können. Es wird daher versucht, diese de novo Synthese zu unterbinden, und zwar durch Vergiftung der Katalysatoren, die für die de novo Synthese verantwortlich sind, durch Abscheidung der Rohgasstäube bei hohen Temperaturen, bei denen die Dioxinzerstörung die Dioxinbildung überwiegt und durch Abscheidung der Rohgasstäube bei einer Temperatur unter 180 °C, bei der eine de novo Synthese unterbleiben soll.
b) Vollständige Abscheidung von Dioxinen an Adsorptionsmaterialien, wie Aktivkoks.

Die bei der Staubabscheidung in Elektrofiltern oder Textilfiltern nicht vollständig abgeschiedenen Dioxine werden an Aktivkoks abgeschieden, durch den das Abgas geleitet wird.

Die Versuche mit den Katalysatorgiften zielen ausschließlich auf eine Verminderung der Dioxinbildung. Andere Probleme, die eventuell beim Einsatz von Katalysatorgiften auftreten können, bleiben dagegen unberücksichtigt.

Beim Einsatz von Aktivkoks besteht die Gefahr, daß neben den Dioxinen nur ein Teil der übrigen PIC's aus dem Abgas entfernt wird. Hinzu kommt, daß eine Nachbehandlung des beladenen Aktivkokses zur Zerstörung der Dioxine und anderer halogenierter Aromaten, entsprechend dem in der EP-A-252 521 beschriebenen Verfahren, unumgänglich ist.

Die DE-A-36 01 917 beschreibt ein Verfahren für die Rauchgasreinigung, insbesondere für die Reinigung der Rauchgase von Abfallverbrennungsanlagen von Stick- und Schwefeloxiden, Kohlenwasserstoffen, Dioxinen und Stäuben. Gewünschtenfalls entstaubt man dabei das Rauchgas bei Temperaturen von 800 bis 1200°C und setzt dann Kohlenstoff in solchen Mengen zu, daß dieser mit dem im Rauchgas enthaltenen Sauerstoff zu Kohlenmonoxid reagiert. Das Kohlenmonoxid muß in ausreichender Menge vorhanden sein, damit die Stick- und Schwefeloxide dann an einem Reduktionskatalysator reduziert werden. Das nach der Reduktion austretende Rauchgas wird nach Zusatz von Sauerstoff an einem Oxidationskatalysator bei Temperaturen zwischen 450 und 550°C behandelt. Als Oxidationskatalysator kann Fe₂O₃, NiO, CuO oder eine Mischung davon zur Anwendung kommen.

Die DE-A-38 04 722 beschreibt ein Verfahren zur Beseitigung organischer Verbindungen, beispielsweise Kohlenwasserstoffe oder organische Halogenverbindungen, aus einem Abgas unter oxidativen Bedingungen in Gegenwart eines Katalysators bei Temperaturen von etwa 200 bis etwa 400°C. Als Katalysator kommt ein Mischoxid-Katalysator auf Titandioxid-Basis zur Anwendung. Der Katalysator enthält bevorzugt neben Titandioxid noch Chromoxid und/oder Manganoxid und/oder Kupferoxid kann aber auch Oxide der Übergangsmetalle Vanadium, Wolfram oder Molybdän enthalten.

Die EP-A-252 521 beschreibt u.a. ein Verfahren zum Abbau von polyhalogenierten Verbindungen unter oxidativen Bedingungen in Gegenwart von Sauerstoff und Wasser. Als Katalysator können Übergangsmetalloxid-Katalysatoren zur Anwendung kommen.

Der vorliegenden Erfindung liegt die Aufgabe zugrunde, ein Verfahren zur Verringerung der Emission von organischen Halogenverbindungen zur Verfügung zu stellen, das möglichst einfach durchzuführen ist und bei dem die Halogenverbindungen so vollständig wie möglich entfernt werden.

Überraschenderweise wurde nun gefunden, daß diese Aufgabe mit einem Verfahren gelöst wird, bei dem bestimmte Katalysatoren unter oxidativen Bedingungen eingesetzt werden.

Gegenstand der vorliegenden Erfindung ist daher ein Verfahren zur Verringerung der Emission von organischen Halogenverbindungen, wie halogenierte aromatische Verbindungen, z.B. Chlorbenzole, Chlorphenole, polychlorierte Biphenyle, polyhalogenierte (insbesondere polychlorierte und polybromierte) Dibenzodioxine und Dibenzofurane, halogenierte aliphatische Verbindungen, z.B. Tri- und Tetrachlorethen, Hexachlorcyclohexan etc.,insbes. in Abgasen von Verbrennungsanlagen, insbesondere Müll- und Abfallverbrennungsanlagen, wobei man das die organischen Halogenverbindungen enthaltende Abgas bei einer Temperatur von 150 bis 500°C unter oxidativen Bedingungen in Gegenwart eines Katalysators behandelt, das dadurch gekennzeichnet ist, daß man einen Katalysator verwendet, der TiO₂, WO₃, V₂O₅ und gegebenenfalls MoO₃ gemäß Anspruch 1 enthält.

Kurzbeschreibung der Figuren:
Es zeigen:
- Fig. 1: Eine graphische Darstellung der katalytischen Oxidation von Trichlordibenzofuran (TriCDF) und Hexachlorbenzol (HCB) in Abhängigkeit von der Katalysatortemperatur
- Fig. 2: Eine graphische Darstellung der katalytischen Oxidation von HCB in Abhängigkeit von der Raumgeschwindigkeit des Abgases
- Fig. 3: eine schematische Darstellung der Reinigung eines Abgases, das NOₓ und PCI's enthält
- Fig. 4: eine Variante des in Fig. 3 gezeigten Schemas
- Fig. 5: eine graphische Darstellung, die den Zusammenhang zwischen der spezifischen Katalysatorfläche und der Zerstörungsrate von Dioxin angibt
Denox-Katalysatoren sind seit langem bekannt und werden zur katalytischen Reduktion von Stickoxiden NOₓ mit Ammoniak bei Salpetersäureanlagen und Großfeuerungsanlagen verwendet. Solche Denox-Katalysatoren und deren Herstellung sind beispielsweise beschrieben in VDI-Berichte Nr. 730, 1989, Seiten 121 bis 156) sowie in DE-A- 34 33 197, 34 38 367 und 35 31 810 und den US-A- 4 085 193 und 4 378 338.

Die erfindungsgemäß zur Anwendung kommende Katalysatoren (Gew.-%, bezogen auf das Gesamtgewicht) sind

| | |
|---|---|
| TiO₂ | 70 - 80 % |
| WO₃ | 2 - 10 %, |
| V₂O₅ | 0.5 - 3 % |
| MoO₃ | 0 -4 % , |

- Rest:: Füllstoffe, z.B. Glasfaser, Ton, ggf. SO₄
- Porenvolumen:: 100 - 400 mm³/g
- BET-Oberfläche:: 20 - 100 m²/g
- mittl. Porenradius:: 50 - 200 Å

Die Steigerung des Gehaltes an den Zusätzen, insbesondere von V₂O₅ ist dadurch begrenzt, daß bei höheren Gehalten im wesentlichen nur noch die Konversionsrate von SO₂ zu SO₃ erhöht wird, die NOₓ-Abbaurate jedoch kaum mehr. Der Nachteil einer hohen SO₃-Bildungsrate liegt in der Korrosions- und Verstopfungsgefahr der dem Katalysator nachgeschalteten kälteren Anlagenkomponenten durch auskondensierende Schwefelsäure oder deren Salze. Bei Abgasen mit geringem SO₂-Gehalt (z.B. nach einer Rauchgaswäsche) ist dieses Problem jedoch weniger gegeben, so daß in solchen Fällen Katalysatoren mit hohen SO₂-Konversionsraten eingesetzt werden können. So zeigt sich zum Beispiel, daß die Modellsubstanz Tetrachlorethen mit einem Katalysator mit niedrigem V₂O₅-Gehalt, der üblicherweise mit "High-Dust"-Typ bezeichnet wird, bei einem SV-Wert von 2000 und einer Temperatur von 300 °C zu 70 % zerstört wird, während ein Katalysator mit höherem V₂ O₅-Gehalt, der als "Low-Dust"-Typ bezeichnet wird, unter gleichen Bedingungen eine Abbaurate von über 95 % erzielt.

Das erfindungsgemäße Verfahren muß unter oxidativen Bedingungen durchgeführt werden. Das heißt, für das erfindungsgemäße Verfahren dürfen die Denox-Katalysatoren nicht unter den Bedingungen verwendet werden, wie sie nach dem Stand der Technik für den Abbau von Stickoxiden verwendet werden. Das erfindungsgemäße Verfahren wird daher so durchgeführt, daß ausreichend Sauerstoff vorhanden ist, damit die Sauerstoffsorption die Sorption von reduzierenden Substanzen überwiegt, z.B. O₂ 6 %, NH₃<50 ppm. Vorzugsweise arbeitet man bei einem O₂-Gehalt von 6 - 12 % bzw. bei höheren O₂-Gehalten unter Zugabe von Luft oder O₂-angereicherter Luft.

Für das erfindungsgemäße Verfahren haben sich folgende Temperaturbereiche als besonders zweckmäßig erwiesen:
300 bis 500 °C; 200 bis 400 °C; und 250 bis 350 °C.

Bei dem erfindungsgemäßen Verfahren werden die Abgase in der Regel über die Katalysatoren geleitet, die als Festbett oder Wirbelbett angeordnet sind. Die Strukturierung der Katalysatoren ist nicht kritisch, sie können in bekannter Weise z.B. in Honigwabenstruktur als Vollmaterial mit Zellöffnungen zwischen 2 bis 10 mm oder als Pellets etc. ausgeführt sein oder auf Streckmetallplatten aufgebracht sein.

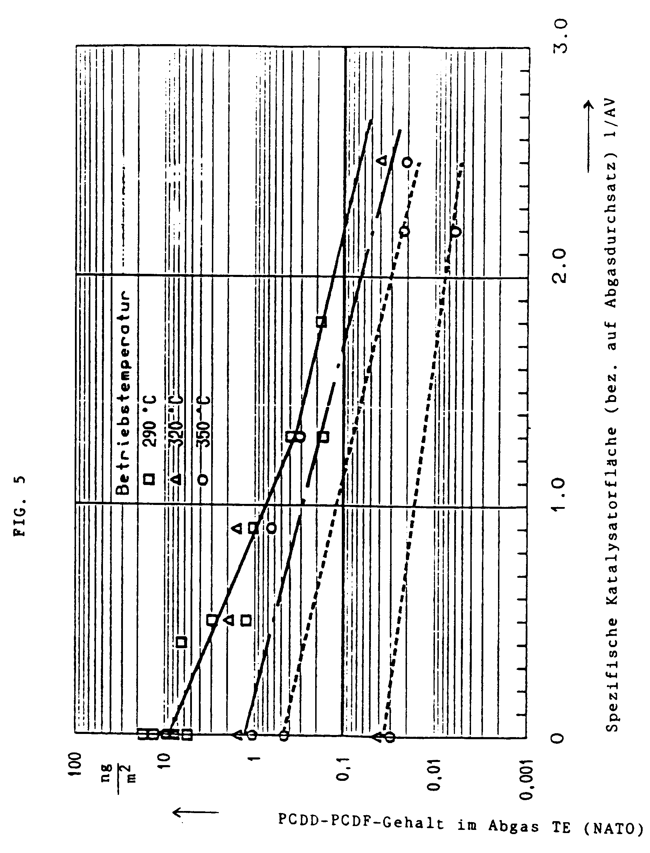

Die spezifische (geometrische) Oberfläche der Katalysatoren, bezogen auf die durchgesetzte Abgasmenge (auch ausgedrückt durch deren Kehrwert, dem sog. AV-Wert (area velocity)) richtet sich unter anderem nach der Schadstoffmenge und der gewünschten Abbaurate. Der Zusammenhang zwischen der spezifischen Katalysatorfläche und der Zerstörungsrate der Schadstoffe (am Beispiel von Dioxin) ist der Fig. 5 zu entnehmen.

Das erfindungsgemäße Verfahren ist auch bei hohen Raumgeschwindigkeiten durchführbar. Vorzugsweise arbeitet man jedoch mit einer Raumgeschwindigkeit von ≦ 5000/h. Optimal ist eine Raumgeschwindigkeit von ≦ 2000/h. Es hat sich gezeigt, daß bei diesen Raumgeschwindigkeiten je nach den gewählten Bedingungen eine praktisch vollständige Zerstörung der Produkte unvollständiger Verbrennung erfolgt.

Um hohe Zerstörungsraten zu erhalten muß folglich eine entsprechend große spezifische Katalysatorfläche vorgesehen werden. Die Raumgeschwindigkeit allein ist hierfür als Kenngröße nicht ausreichend.

Die Katalysatorgröße hängt ab von der Katalysatortemperatur, der Verweilzeit (Raumgeschwindigkeit), der Katalysatoroberfläche pro Volumen und der Wirksamkeit des Katalysators. Mit den erfindungsgemäßen Katalysatoren, insbesondere solchen mit vergleichsweise hoher Denox-Aktivität und hoher SO₂-Konversionsrate können mit Flächengeschwindigkeiten (AV-Werten) kleiner 4 m/h praktisch vollständige Zerstörungen der Produkte unvollständiger Verbrennung erreicht werden.

Müll- und Abfallverbrennungsanlagen müssen in Zukunft mit einer Vorrichtung zur NOₓ-Minderung ausgestattet werden, um die niedrigen Werte der zukünftigen gesetzlichen Vorschriften einhalten zu können. Um dies zu erreichen, wird die selektive katalytische Reduktion der Stickoxide mit Denox-Katalysatoren in Gegenwart von Ammoniak vorgesehen. Dabei werden die Stickoxide zu Stickstoff reduziert.

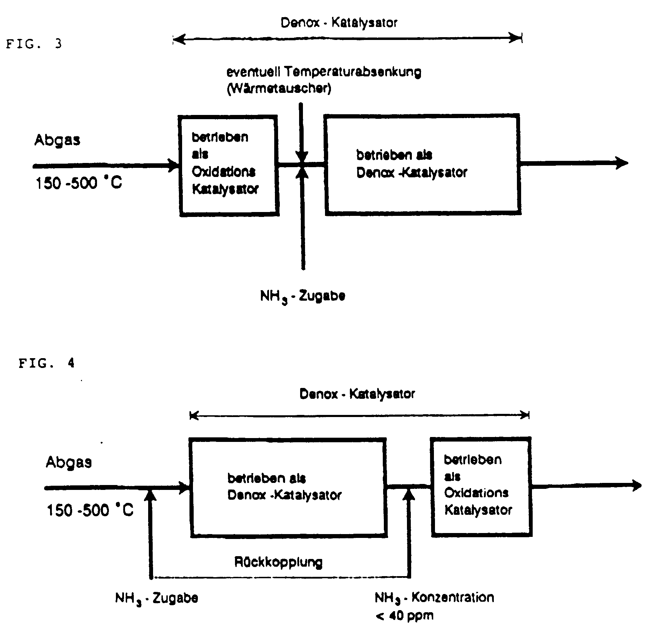

Gemäß der vorliegenden Erfindung ist es nun möglich, sowohl die Stickoxide als auch die Produkte unvollständiger Verbrennung in einem Arbeitsgang und mit ein und demselben Katalysator zu beseitigen. Man hat dabei die beiden folgenden Möglichkeiten, das Verfahren durchzuführen:
a) Die Abgase werden über den Katalysator geleitet, wobei man zunächst oxidative Bedingungen vorsieht, so daß zuerst ein Abbau der organischen Produkte unvollständiger Verbrennung erfolgt. Wie erwähnt, hängt das notwendige Katalysatorvolumen von der Katalysatortemperatur, der Verweilzeit und der Wirksamkeit des Katalysators ab. Vorzugsweise wird man dabei im Temperaturbereich von 300 bis 500 °C arbeiten.
   Nach dem Abbau der PIC's erfolgt die Reduktion der Stickoxide an einem Denox-Katalysator. Zu diesem Zweck wird nach Durchlaufen des für die oxidative Betriebsweise erforderlichen Katalysators Ammoniak im Überschuß eingespeist, so daß reduktive Bedingungen für die Reduktion der Stickoxide vorherrschen. Die Reduktion der Stickoxide kann dann in bekannter Weise erfolgen. Beispielsweise kann die Temperatur für die Entfernung der Stickoxide verringert werden, z.B. auf 150 bis 300 °C. Im austretenden Abgas ist die Menge an PIC's und Stickoxiden dann je nach Verfahrensführung erheblich verringert. Diese Arbeitsweise ist in Figur 3 näher erläutert.
b) Das zu behandelnde Abgas wird zunächst unter reduktiven Bedingungen unter Zuspeisen von Ammoniak über einen Denox-Katalysator geleitet. Dadurch erfolgt ein Abbau der Stickoxide zu Stickstoff. Nach dem Abbau der Stickoxide werden die Abgase unter oxidativen Bedingungen über den Katalysator geleitet, um den Abbau der PIC's zu bewirken. Für diesen Zweck ist es erforderlich, daß die Ammoniakkonzentration ≦ 50 ppm ist. Besonders bevorzugt ist es bei einer Ammoniakkonzentration zu arbeiten, die ≦ 20 ppm und insbesondere ≦ 10 ppm ist.

Dies kann beispielsweise dadurch erreicht werden, daß man die Ammoniakeinspeisung kontrolliert steuert, oder daß man nach der Reduktionsstufe Luft oder mit Sauerstoff angereicherte Luft einspeist. Diese Arbeitsweise ist in Figur 4 näher erläutert.

Die nachfolgenden Beispiele erläutern die Erfindung:

### Referenz-Beispiel 1:

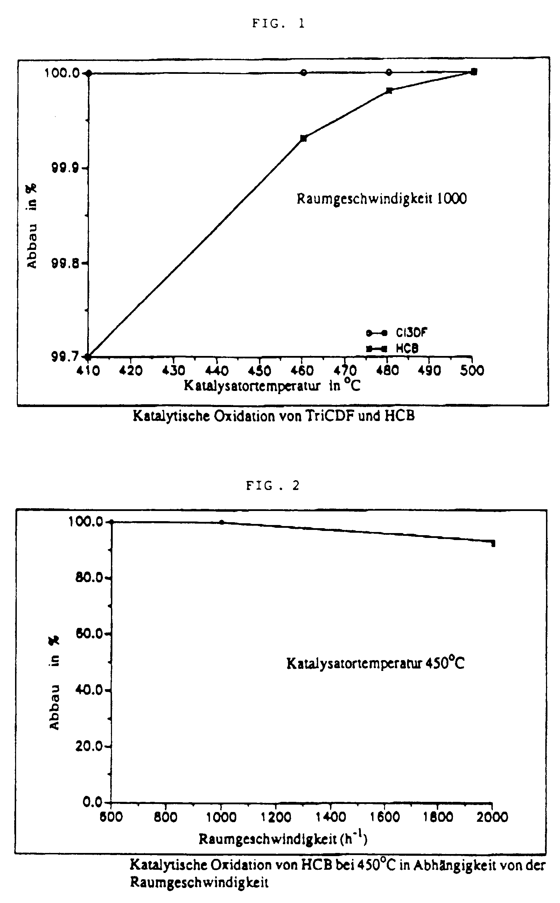

In einem Laborexperiment wurde ein Denox-Katalysator (Wabe, Volumen 200 ml) vom Typ Eisenoxid (Didier-Katalysator) hinsichtlich seiner Zerstörungseffizienz gegenüber den Modellsubstanzen Hexachlorbenzol und 2,4,8-Trichlordibenzofuran untersucht. In Fig. 1 ist die Temperaturabhängigkeit des Abbaus (Zerstörungseffizienz) für eine Raumgeschwindigkeit von 1000/h dargestellt. In Fig. 2 ist die Abhängigkeit des Wirkungsgrades von der Raumgeschwindigkeit bei 450 °C dargestellt.

Wird Ammoniak in einer Konzentration von 1000 ppm vor dem Katalysator eingebracht, ist keine Oxidationswirkung mehr zu erkennen (Abbau = 0 %).

### Beispiel 1 (fällt nicht unter Anspruch 1)

An einer Müllverbrennungsanlage wurde ein Teilstrom des Abgases nach Aufheizung auf 260 °C bis 280 °C mit NH₃ beaufschlagt, wobei die Volumenkonzentration an NH₃ pro m³ niedriger als der NOₓ-Gehalt des Abgases war, und über einen Denox-Katalysator geleitet.
Die Zusammensetzung des Katalysators war folgendermaßen:

| | |
|---|---|
| TiO₂ | 75 Gew.-% |
| V₂O₅ | 4 Gew.-% |
| WO₃ | 8 Gew.-% |
| Glasfaser | 7 Gew.-% |
| Rest | Inertmaterial |
| Porenvolumen | 300 mm³/g |
| spez. Oberfläche | 60 m²/g. |

Nach Durchlaufen verschiedener Katalysatorvolumina wurde die Konzentration an PCDD/PCDF (Pentachlordibenzodioxin/Pentachlordibenzofuran) gemessen. Die Probenahme erfolgte an verschiedenen Tagen. Zeitgleich zu der jeweiligen Probenahme hinter dem Katalysator wurde eine Referenzprobenahme vor der Ammoniakeindüsung durchgeführt. Die Katalysatortemperatur betrug 260-280°C. Die Untersuchungsergebnisse sind in Tabelle 1 dargestellt.
Nur nach der 4. Lage Katalysator konnte in mehreren Versuchen reproduzierbar eine deutliche Abnahme der PCDD/PCDF-Konzentration (>80 %) nachgewiesen werden. Die Menge an eingetragenem Ammoniak war konstant und nicht auf den jeweiligen NOx-Gehalt abgestimmt. Die Ammoniak-Konzentration betrug bei der PCDD/PCDF-Messung nach der 4. Lage (Tabelle 1) hinter der 3. Lage weniger als 10 ppm.

### Beispiel 2

In Abänderung von Beispiel 1 wurde das Katalysatorvolumen vergrößert, die Abgastemperatur auf über 300 °C erhöht und die NH₃-Dosierung abgestellt. Verschiedene Testergebnisse sind in Tabelle 2 dargestellt. Es wurden Zerstörungsraten über 95 % erzielt.

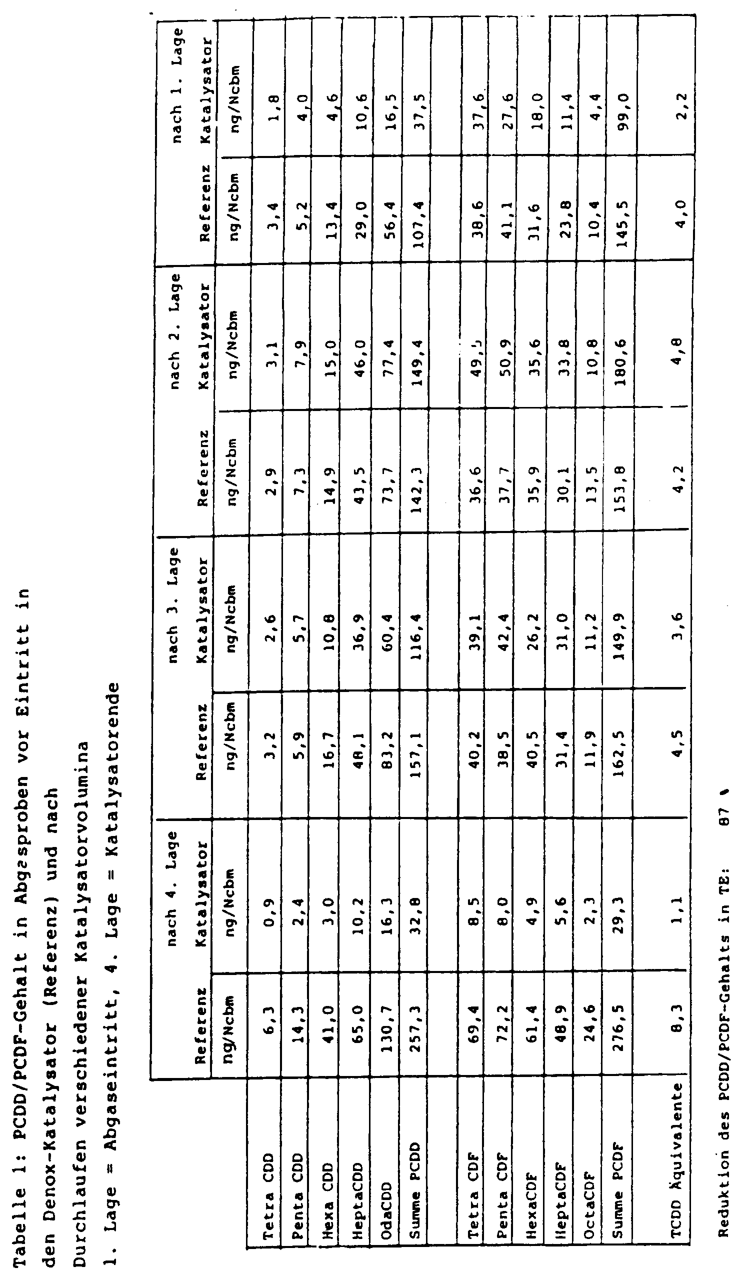

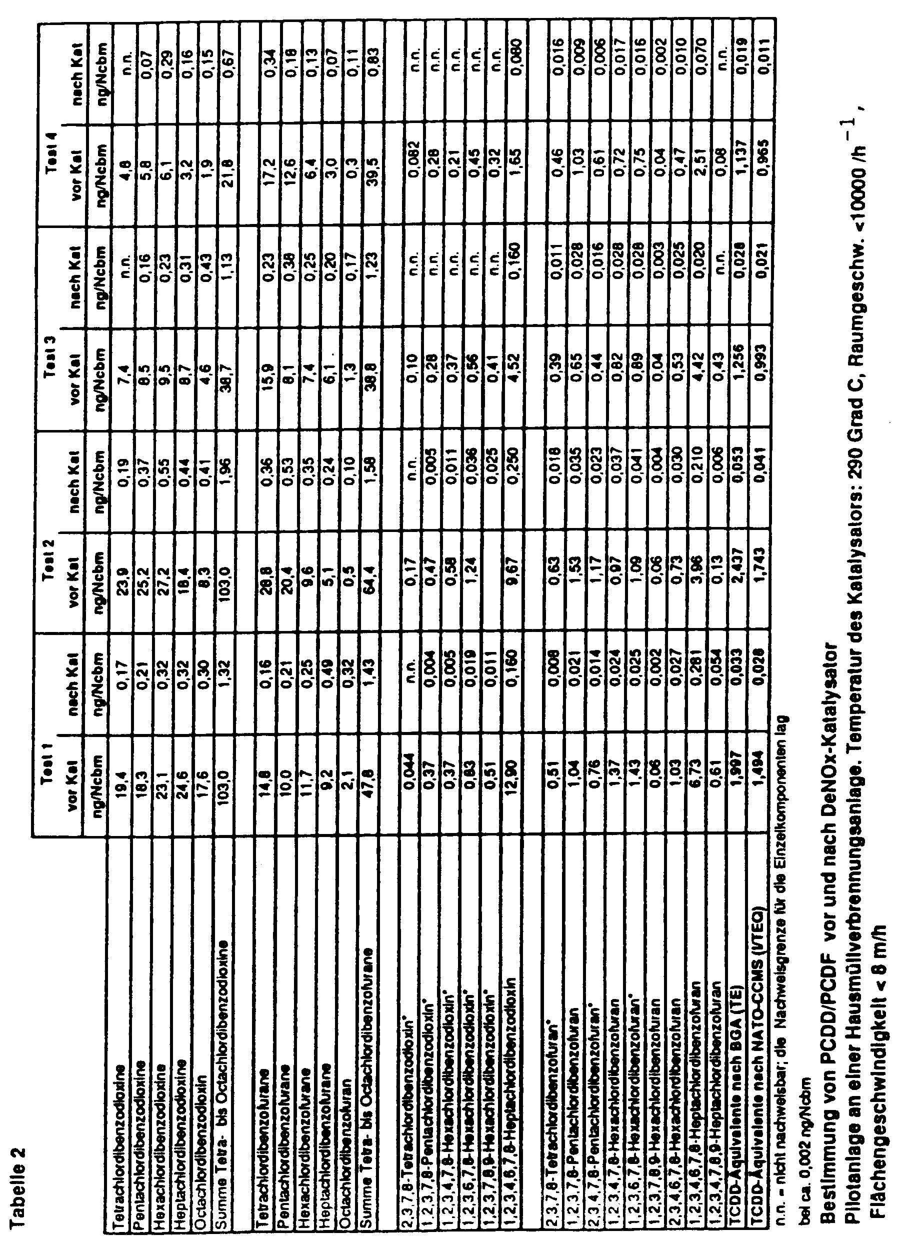

## Patentansprüche

1. Verfahren zur Verringerung der Emission von organischen Halogenverbindungen in einem Abgas, das die organischen Halogenverbindungen als Produkt unvollständiger Verbrennung enthält, wobei man das Abgas bei einer Temperatur von 150 bis 500°C unter oxidativen Bedingungen in Gegenwart eines Katalysators behandelt, und wobei man einen Katalyator verwendet, der Titandioxid, Wolframtrioxid und Vanadiumpentoxid sowie gegebenenfalls Molybdäntrioxid enthält und folgende Zusammensetzung aufweist:
| | |
|---|---|
| TiO₂ | 70 - 80 Gew.-% |
| WO₃ | 2 - 10 Gew.-% |
| V₂O₅ | 0,5 - 3 Gew.-% |
| MoO₃ | 0 - 4 Gew.-% |
wobei der Rest Füllstoffe sind, und der ein Porenvolumen von 100 bis 400 mm³/g, einen mittleren Porenradius von 5 bis 20 nm und eine BET-Oberfläche von 20 bis 100 m²/g aufweist.

2. Verfahren nach Anspruch 1, dadurch gekennzeichnet, daß man bei einer Temperatur von 300 bis 500°C arbeitet.

3. Verfahren nach einem der vorhergehenden Ansprüche, dadurch gekennzeichnet, daß man bei einer Raumgeschwindigkeit des Abgases von ≤ 10 000/h, insbesondere ≤ 5000/h arbeitet.

4. Verfahren nach einem der vorhergehenden Ansprüche, dadurch gekennzeichnet, daß man bei spezifischen Flächengeschwindigkeiten von ≤ 8 m/h, insbesondere ≤ 4 m/h arbeitet.

5. Verfahren nach einem der vorhergehenden Ansprüche, dadurch gekennzeichnet, daß das Verfahren in Kombination mit einem Verfahren zum Abbau von Stickoxiden durchgeführt wird, wobei man die Abgase zuerst unter oxidativen Bedingungen über den Katalysator leitet und anschließend die Abgase zur Entfernung der Stickoxide unter Einspeisung von Ammoniak über den Katalysator leitet.

6. Verfahren nach einem der Ansprüche 1 bis 4, dadurch gekennzeichnet, daß man das Verfahren in Kombination mit einem Verfahren zur Entfernung der Stickoxide durchführt, wobei man die Abgase zunächst zur Entfernung der Stickoxide unter Einspeisung von Ammoniak über den Katalysator leitet und anschließend die Abgase bei einer Ammoniakkonzentration von ≤ 50 ppm unter oxidativen Bedingungen zur Entfernung der organischen Halogenverbindungen über den Katalysator leitet.

7. Verfahren nach Anspruch 6, dadurch gekennzeichnet, daß man bei einer Ammoniakkonzentration von ≤ 20 ppm, insbesondere ≤ 10 ppm arbeitet.

## Claims

1. A process for reducing the emission of organic halogen compounds in an exhaust gas which contains the organic halogen compounds as a product of incomplete combustion, wherein the exhaust gas is treated at a temperature of 150 to 500°C, under oxidative conditions, in the presence of a catalyst, and wherein a catalyst is used which contains titanium dioxide, tungsten trioxide and vanadium pentoxide and, optionally, molybdenum trioxide and which has the following composition:
| | |
|---|---|
| TiO₂ | 70 - 80 wt.% |
| WO₃ | 2 - 10 wt.% |
| V₂O₅ | 0.5 - 3 wt.% |
| MoO₃ | 0 - 4 wt.% |
the remainder being fillers, and which has a pore volume of 100 to 400 mm³/g, an average pore radius of 5 to 20 nm and a BET surface area of 20 to 100 m²/g.

2. A process according to claim 1, characterised in that it is carried out at a temperature of 300 to 500°C.

3. A process according to one of the preceding claims, characterised in that it is carried out at a spatial speed of the exhaust gas of ≤ 10,000/h, more particularly ≤ 5,000/h.

4. A process according to one of the preceding claims, characterised in that it is carried out at specific surface speeds of ≤ 8 m/h, more particularly ≤ 4 m/h.

5. A process according to one of the preceding claims, characterised in that the process is carried out in combination with a process for the decomposition of nitrogen oxides, the exhaust gases initially being passed over the catalyst, under oxidative conditions, and the exhaust gases then being passed over the catalyst, while ammonia is fed in, in order to remove the nitrogen oxides.

6. A process according to one of claims 1 to 4, characterised in that the process is carried out in combination with a process for the removal of the nitrogen oxides, the exhaust gases initially being passed over the catalyst, while ammonia is fed in, in order to remove the nitrogen oxides and the exhaust gases then being passed over the catalyst, at an ammonia concentration ≤ 50 ppm, under oxidative conditions, in order to remove the organic halogen compounds.

7. A process according to claim 6, characterised in that it is carried out that at an ammonia concentration of ≤ 20 ppm, more particularly ≤ 10 ppm.

## Revendications

1. Procédé pour diminuer l'émission de composés organiques halogénés dans un rejet gazeux comprenant les composés halogénés organiques en tant que produits de combustion incomplète, le rejet gazeux étant traité à une température de 150 à 500°C dans des conditions oxydantes en présence d'un catalyseur, procédé dans lequel on utilise un catalyseur qui contient du dioxyde de titane, du trioxyde de tungstène et du pentoxyde de vanadium, ainsi qu'éventuellement du trioxyde de molybdène, et qui présente la composition suivante:
| | |
|---|---|
| TiO₂ | 70 à 80 % en poids |
| WO₃ | 2 à 10 % en poids |
| V₂O₅ | 0,5 à 3 % en poids |
| MoO₃ | 0 à 4 % en poids |
le reste étant constitué par des charges, et qui présente un volume des pores de 100 à 400 mm³/g, un rayon moyen des pores de 5 à 20 nm, et une surface BET de 20 à 100 m²/g.

2. Procédé selon la revendication 1, caractérisé par le fait que l'on travaille à une température de 300 à 500°C.

3. Procédé selon l'une des revendications précédentes, caractérisé par le fait que l'on travaille à une vitesse spaciale du gaz rejeté inférieure ou égale à 10 000/h, en particulier inférieure ou égale à 5000/h.

4. Procédé selon l'une des revendications précédentes, caractérisé par le fait que l'on travaille avec des vitesses spécifiques de surface inférieures ou égales à 8 m/h, en particulier inférieures ou égales à 4 m/h.

5. Procédé selon l'une des revendications précédentes, caractérisé par le fait que le procédé est mené en combinaison avec un procédé pour la destruction des oxydes d'azote, les gaz rejetés étant d'abord envoyés dans des conditions oxydantes sur le catalyseur et les gaz rejetés étant ensuite, pour éliminer les oxydes d'azote, envoyés avec injection d'ammoniaque sur le catalyseur.

6. Procédé selon l'une des revendications 1 à 4, caractérisé par le fait que l'on met en oeuvre le procédé en combinaison avec un procédé pour la destruction des oxydes d'azote, les gaz rejetés étant envoyés, en premier lieu, sur le catalyseur avec injection d'ammoniaque et les gaz rejetés étant envoyés ensuite sur le catalyseur avec une concentration d'ammoniaque inférieure ou égale à 50 ppm dans des conditions oxydantes pour éliminer les composés halogénés organiques.

7. Procédé selon la revendication 6, caractérisé par le fait que l'on travaille avec une concentration d'ammoniaque inférieure ou égale à 20 ppm, en particulier inférieure ou égale à 10 ppm.
